# EUROPEAN PATENT SPECIFICATION

(11) **EP 2 985 953 B1**
(45) Date of publication and mention of the grant of the patent: **16.05.2018**
(21) Application number: 13796960.6
(22) Date of filing: 22.07.2013
(51) Int. Cl.: H04W 48/16, H04L 29/08, H04W 84/12

(54) **METHOD AND DEVICE FOR AUTOMATICALLY ESTABLISHING WIFI-BASED LOCAL AREA NETWORKS AMONG DEVICES IN PRIVATE CLOUD**
VERFAHREN UND VORRICHTUNG ZUM AUTOMATISCHEN HERSTELLEN WIFI-BASIERTER LOKALER NETZWERKE ZWISCHEN VORRICHTUNGEN IN EINER PRIVATEN CLOUD
PROCÉDÉ ET DISPOSITIF PERMETTANT D'ÉTABLIR AUTOMATIQUEMENT DES RÉSEAUX LOCAUX BASÉS SUR LE WIFI ENTRE DES DISPOSITIFS DANS UN NUAGE PRIVÉ

(30) Priority: 09.04.2013 CN 201310120697
(43) Date of publication of application: 17.02.2016
(73) Proprietor: ZTE Corporation, Shenzhen, Guangdong 518057 (CN)
(72) Inventor: ZHOU, Xiaowei, Shenzhen Guangdong 518057 (CN)
(74) Representative: Brevalex
(86) International application number: PCT/CN2013/079828
(87) International publication number: WO 2013/178157

(56) References cited:
- CN-A- 102 083 152
- CN-A- 102 364 979
- CN-A- 102 595 407
- CN-A- 102 638 797
- US-A1- 2006 067 299
- US-A1- 2008 113 674
- US-A1- 2012 244 847

## Description

### TECHNICAL FIELD

The disclosure relates to the field of mobile communications, and in particular to a method and device for automatically establishing a Wireless Fidelity (WIFI)-based local area network among equipment in private cloud.

### BACKGROUND

Along with gradual development of a private cloud technology, various kinds of intelligent equipment (such as a smart television, a smart mobile phone, a tablet computer, a Personal Computer (PC), a smart set-top box and a smart projector) serve as devices directly oriented to users, different equipment is mutually authenticated, and convenient and smooth interaction between the equipment is undoubtedly an important direction of improving a user experience.

In an existing technology, a private cloud technology includes a cloud server and a client, and the cloud server supports a webpage, database and data uploading and downloading function, also supports simultaneous login of multiple pieces of equipment with the same account, and is a highlight in the private cloud technology. The client includes an intelligent application platform such as Android, iphone and Windows Phone. Client equipment is classified into home network equipment, mobile handheld equipment and home interoperation equipment.

In the existing private cloud technology, the following two kinds of services are supported: 1, browsing and file uploading, downloading and synchronization after a client logs in a cloud server, including an application/file/video, contact information and the like; and 2, client interaction.

In the existing technology, there are two application scenarios for different equipment in a private cloud system:
1: pieces of client equipment logging in the same server are within WIFI signal coverage of each other, or one piece of client equipment is within the WIFI signal coverage of the other client equipment; and
2: the pieces of client equipment logging in the same server are not within the WIFI signal coverage of each other, or one piece of client equipment is not within the WIFI signal coverage of the other client equipment.

During a current private cloud technology application, a client may upload, download and share a resource after logging in a server, but the server is necessary for the resource sharing of different clients, and different data sharing and sending methods are not selected according to scenarios where different clients are actually located, so that server resource tension and poor user experiences are easily caused along with increase of the number of clients in finite server resources,

The US patent application publication No. US 2012/0244847 A1 relates transfer of data-intensive content between portable devices. In the US patent application, a new peer to peer connection is established between phones.

The CN patent application publication No. 102638797 A relates to a method, terminal for accessing wireless network, access network node and authentication server.

### SUMMARY

The embodiments of the disclosure provide a method and device for automatically establishing a WIFI-based local area network among equipment in private cloud, so as to solve the problem in an existing private cloud technology that a server is necessary for interaction between clients and a WIFI function of intelligent equipment may not be fully utilized for interaction during local area network establishment which further causes resource tension to the server and results in poor user experience and solve the problem that the server cannot control the terminals to form a local area network, and when a local area network is present, the server cannot control a terminal to join in the local area network.

An embodiment of the disclosure provides a method for automatically establishing a WIFI-based local area network among equipment in private cloud, which includes: Step 1: a server acquires equipment information reported by a client after the client successfully logs in the server, and stores equipment attribute information and equipment state information of the client according to the equipment information wherein the equipment attribute information comprises an SSID of equipment where the client is installed, type and version information of an intelligent system installed in the equipment and WIFI information, and wherein the equipment state information comprises a login state, information about whether the equipment has been in a certain WIFI-based local area network or not and information about whether the equipment is a hotspot in a certain WIFI-based local area network or not; and Step 2: the server judges whether the client has ability to access a WIFI-based local area network which has been established or not according to the equipment information and the state information, controls the client to join the WIFI-based local area network if the client has ability to access the WIFI-based local area network which has been established, otherwise judges whether the client can form a new WIFI-based local area network with other client which has logged in the server but has not accessed any WIFI-based local area network or not, and controls the client to form the new WIFI-based local area network when the server determines that the client has the ability to form the new WIFI-based local area network.Preferably, the Step 2 may specifically include: Step 21: the server searches local data to judge whether there is the WIFI-based local area network which has been established or not, Step 22 is executed if there is the WIFI-based local area network which has been established, otherwise Step 24 is executed; Step 22: the server transmits information of the WIFI-based local area network which has been established to the client to enable the client to join the WIFI-based local area network which has been established, and Step 23 is executed; Step 23: the server receives feedback information from the client, and judges whether the client has successfully joined the WIFI-based local area network which has been established or not according to the feedback information, Step 25 is executed if the client has successfully joined the WIFI-based local area network which has been established, otherwise Step 24 is executed; Step 24: the server establishes the new WIFI-based local area network; and Step 25: the server updates the equipment state information stored locally.

Preferably, the Step 1 may specifically include: Step 11: the server acquires the equipment information reported by the client after the client successfully logs in the server; Step 12: the server judges whether the equipment attribute information has existed or not according to the equipment information, Step 13 is executed if the equipment attribute information has existed, otherwise Step 14 is executed; Step 13: the equipment state information corresponding to the equipment attribute information is established according to the equipment information, and the equipment state information is initialized; and Step 14: a virtual Service Set Identifier (SSID) of the client is generated, the equipment state information corresponding to the equipment attribute information is established according to the equipment information after the equipment attribute information corresponding to the client is locally added, and the equipment state information is initialized.

Preferably, Step 24 may specifically include: Step 241: the server judges whether the number of a free client is more than or equal to 2 or not, Step 242 is executed if the number of the free client is more than or equal to 2, otherwise operation is ended, wherein the free clients refer to a client which has logged in the server but has not accessed any WIFI-based local area network; Step 242: the server controls the client to start own equipment as a WIFI hotspot; Step 243: the server judges whether the WIFI hotspot is successfully started or not, Step 244 is executed if the WIFI hotspot is successfully started, otherwise the operation is ended; Step 244: the server transmits WIFI hotspot information to other free client; Step 245: the server judges whether there is a free client finding the client through WIFI or not, Step 246 is executed if there is the free client finding the client through WIFI, otherwise the operation is ended; and Step 246: the server determines a hotspot in the new WIFI-based local area network according to the equipment attribute information, and controls the other free client to join the new WIFI-based local area network.

Preferably, the step that the server controls the other free client to join the new WIFI-based local area network specifically includes that: the client sends equipment information of the other free client to the server for verification after receiving a request message of joining the WIFI-based local area network employing the equipment as a hotspot from the other free client; if a free client of the other free client passes the verification from the server, the client allows the free client to join the WIFI-based local area network employing the equipment as the hotspot, and sends a joining success message to the other free client; and if the free client of the other free client does not pass the verification from the server, the client sends a joining failure message to the free client.

Preferably, the method further may include Step 4: when the server detects that a certain client wants to quit, the server updates equipment state information of a related client and information of a related WIFI-based local area network.

Preferably, the Step 4 may specifically include: Step 41: when the server detects that the certain client wants to quit, the quitting client is judged whether to be located in a certain WIFI-based local area network or not, Step 42 is executed if the quitting client is located in a certain WIFI-based local area network, otherwise Step 49 is executed; Step 42: the server judges whether the quitting client is a hotspot in the certain WIFI-based local area network or not, Step 43 is executed if the quitting client is a hotspot in the certain WIFI-based local area network, otherwise Step 48 is executed; Step 43: the server judges whether the number of the remaining client in the WIFI-based local area network is more than or equal to 2 or not, Step 44 is executed if the number of the remaining client in the certain WIFI-based local area network is more than or equal to 2, otherwise Step 46 is executed; Step 44: the server determines a new hotspot according to the equipment attribute information of the remaining client, and Step 45 is executed; Step 45: the server constructs a new WIFI-based local area network; Step 46: the server updates equipment state information of the remaining client and equipment state information of the quitting client, and Step 47 is executed; Step 47: the remaining client is controlled to join the new WIFI-based local area network which has been established; Step 48: the equipment state information of the quitting client and the information of the certain WIFI-based local area network where the quitting client is located is updated; and Step 49: the equipment state information of the quitting client is updated.

The embodiment of the disclosure further provides a server for automatically establishing a WIFI-based local area network among equipment in private cloud, which includes: an acquisition and storage module, configured to acquire equipment information reported by a client after the client successfully logs in a server and store equipment attribute information and equipment state information of the client according to the equipment information, wherein the equipment attribute information comprises a Service Set Identifier (SSID) of equipment where the client is installed, type and version information of an intelligent system installed in the equipment and WIFI information, and wherein the equipment state information comprises a login state, information about whether the equipment has been in a certain WIFI-based local area network or not and information about whether the equipment is a hotspot in a certain WIFI-based local area network or not; and a processing module, configured to judge whether the client has ability to access a WIFI-based local area network which has been established or not according to the equipment information and the state information, control the client to join the WIFI-based local area network if the client has ability to access the WIFI-based local area network which has been established, otherwise judge whether the client can form a new WIFI-based local area network with other client which has logged in the server but has not accessed any WIFI-based local area network or not, and control the client to form the new WIFI-based local area network when the server determines that the client has the ability to form the new WIFI-based local area network. Preferably, the processing module specifically may include: a searching sub-module configured to search local data to judge whether there is the WIFI-based local area network which has been established or not, call a transmission sub-module if the WIFI-based local area network which has been established is found, otherwise call an establishment sub-module; the transmission sub-module configured to transmit information of the WIFI-based local area network which has been established to the client to enable the client to join the WIFI-based local area network which has been established, and call a second judgment sub-module; the second judgment sub-module, configured to receive feedback information from the client, judge whether the client has successfully joined the WIFI-based local area network which has been established or not according to the feedback information, call a first updating sub-module if the client has successfully joined the WIFI-based local area network which has been established, otherwise call the establishment sub-module; the establishment sub-module, configured to establish the new WIFI-based local area network; and the first updating sub-module, configured to update the equipment state information stored locally.

Preferably, the acquisition and storage module specifically may include: an acquisition sub-module, configured to acquire the equipment information reported by the client after the client successfully logs in the server; a first judgment sub-module, configured to judge whether the corresponding equipment attribute information has existed or not according to the equipment information, call a first processing sub-module if the equipment attribute information has existed, otherwise call a second processing sub-module; the first processing sub-module, configured to establish the equipment state information corresponding to the equipment attribute information according to the equipment information, and initialize the equipment state information; and the second processing sub-module, configured to generate a virtual SSID of the client, establish the equipment state information corresponding to the equipment attribute information according to the equipment information after the equipment attribute information corresponding to the client is locally added, and initialize the equipment state information.

Preferably, the establishment sub-module specifically may include: a first judgment unit configured to judge whether the number of a free client is more than or equal to 2 or not, call a first control unit if the number of the free client is more than or equal to 2, otherwise end operation, wherein the free clients refer to a client which has logged in the server but has not accessed any WIFI-based local area network; a first control unit, configured to control the client to start own equipment as a WIFI hotspot; a second judgment unit, configured to judge whether the WIFI hotspot is successfully started or not, call a transmission unit if the WIFI hotspot is successfully started, otherwise end the operation; the transmission unit, configured to transmit WIFI hotspot information to other free client; a third judgment unit, configured to judge whether there is a free client finding the client through WIFI or not, call a second control unit if there is the free client finding the client through WIFI, otherwise end the operation; and a second control unit, configured to determine a hotspot in the new WIFI-based local area network according to the equipment attribute information, and control the other free client to join the new WIFI-based local area network.

Preferably, the second control unit may be specifically configured to after the client receives request messages of joining the WIFI-based local area network employing the equipment as a hotspot from the other free client, receive equipment information of the other free client from the client, perform verification on the other free client according to the equipment information and send a verification result to the client.

Preferably, the server further may include a quitting module, configured to, when a certain client is detected to quit, update equipment state information of a related client and information of a related WIFI-based local area network.

Preferably, the quitting module specifically may include: a third judgment sub-module configured to, when the certain client is detected to quit, judge whether the quitting client is located in a certain WIFI-based local area network or not, call a fourth judgment sub-module if the quitting client is located in a certain WIFI-based local area network, otherwise call a fourth updating sub-module; the fourth judgment sub-module, configured to judge whether the quitting client is a hotspot in the certain WIFI-based local area network or not, call a fifth judgment sub-module if the quitting client is a hotspot in the certain WIFI-based local area network, otherwise call a third updating sub-module; the fifth judgment sub-module, configured to judge whether the number of a remaining client in the certain WIFI-based local area network is more than or equal to 2 or not, call a determination sub-module if the number of the remaining client in the certain WIFI-based local area network is more than or equal to 2, otherwise call a second updating sub-module; the determination sub-module, configured to determine a new hotspot according to the equipment attribute information of the remaining client, and call a construction sub-module; the construction sub-module, configured to construct a new WIFI-based local area network; the second updating sub-module, configured to update equipment state information of the remaining client and equipment state information of the quitting client, and call a control sub-module; the control sub-module, configured to control the remaining client to join the new WIFI-based local area network which has been established; the third updating sub-module, configured to update the equipment state information of the quitting client and the information of the certain WIFI-based local area network where the quitting client is located; and the fourth updating sub-module, configured to update the equipment state information of the quitting client.

By the technical solutions provided by the embodiments of the disclosure, the problem that a server is necessary for interaction between clients and a WIFI function of intelligent equipment may not be fully utilized for interaction during local area network establishment in an existing private cloud technology is solved, and a system may actively initiate the operation of establishing or joining a local WIFI-based local area network according to a specific actual condition in regardless of a geographical position of the equipment logging in private cloud or a change in the geographical position, and guide a user to easily establish a WIFI-based local area network or join an existing WIFI-based local area network, thereby prevent a server from resource tension and avoid poor user experience.

### BRIEF DESCRIPTION OF THE DRAWINGS

Fig. 1 is deployment diagram of an embodiment of the disclosure;
Fig. 2 is a flowchart of a method for automatically establishing a WIFI-based local area network among equipment in private cloud according to an embodiment of the disclosure;
Fig. 3 is a flowchart of processing equipment information reported by a client by a server according to an embodiment of the disclosure;
Fig. 4 is a flowchart of a server controlling a client to join an established local area network according to an embodiment of the disclosure;
Fig. 5 is a flowchart of a server controlling clients which have not joined a local area network to form a new local area network according to an embodiment of the disclosure;
Fig. 6 is a processing flowchart of a client when equipment A requests to join a local area network employing equipment B as a hotspot according to an embodiment of the disclosure;
Fig. 7 is a processing flowchart of control of a server in a case of quitting of a client according to an embodiment of the disclosure; and
Fig. 8 is a structure diagram of a device for automatically establishing a WIFI-based local area network among equipment in private cloud according to an embodiment of the disclosure.

### DETAILED DESCRIPTION

Exemplary embodiments of the disclosure are described below with reference to the drawings in more detail. The schematic embodiments of the disclosure are shown in the drawings, but it should be understood that the disclosure should be implemented in various forms rather than restricted by the embodiments described here. On the contrary, these embodiments are provided to make the disclosure understood more thoroughly, and the scope of the disclosure may be completely conveyed to those skilled in the art.

In order to solve the problem that a server is necessary for interaction between clients and a WIFI function of intelligent equipment may not be fully utilized for interaction during local area network establishment in an existing private cloud technology, the embodiments of the disclosure provide a method and device for automatically establishing a WIFI-based local area network among equipment in private cloud.

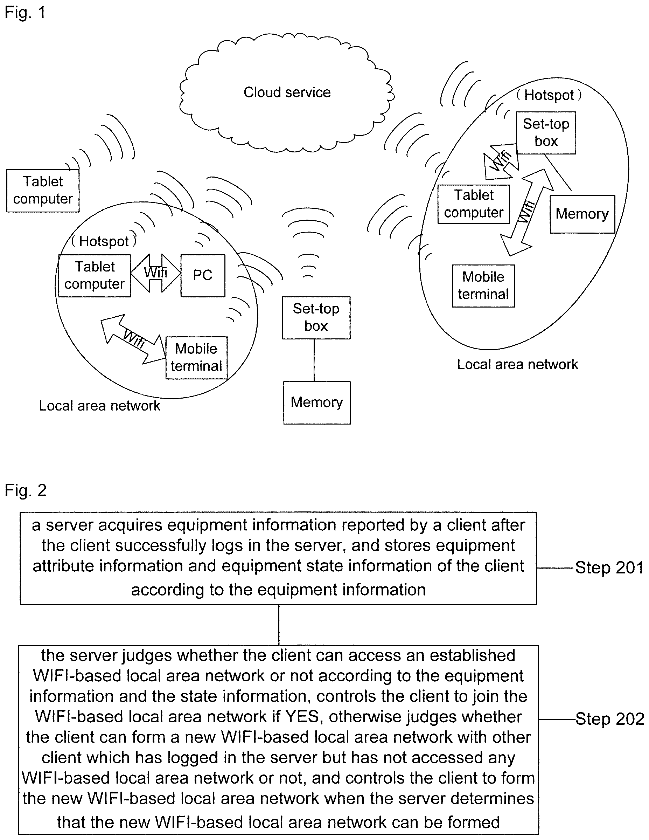

Fig. 1 is a deployment diagram of an embodiment of the disclosure. In a system deployment shown in Fig. 1, an application program of a client reports specific equipment information to an application program of a server after the client successfully logs in the server. The application program of the server is responsible for locally storing equipment information of the client and state information of the client. The application program of the server controls and judges whether a new login client can access a WIFI-based local area network which has been established or not. When the new login client cannot pass authentication to access the WIFI-based local area network which has been established, the application program of the server controls and judges whether the new login client can form a new WIFI-based local area network with other client which has logged in the server but has not accessed any WIFI-based local area network or not. After the client receives an instruction from the server, the client is responsible for finishing operation according to the instruction, interacting with a user and reporting a result to the server. When the client quits, the server updates its state and state information; the server controls and processes a composition change of the WIFI-based local area network where the quitting client is located; and the server updates state information of other equipment related to the quitting client.

By the technical solution provided by the embodiment of the disclosure, when a home private cloud user goes from city A to city B to visit a relative, the user may quit a local area network which the user joined in city A without any operation and influence on the user's operation of simply and easily establishing or joining a new WIFI-based local area network in city B. Or, when an enterprise private cloud user moves from working area A to working area B, the user may easily switch different WIFI-based local area networks and perform client interaction through the local area networks, including cooperation with colleagues and entertainment with relatives and friends, so that good experiences are brought to the user.

The disclosure is further described below with reference to the drawings and embodiments in detail. It should be understood that the specific embodiments described here are only adopted to explain the disclosure and not intended to limit the disclosure.

### Method embodiment

According to the embodiment of the disclosure, a method for automatically establishing a WIFI-based local area network among equipment in private cloud is provided, Fig. 2 is a flowchart of a method for automatically establishing a WIFI-based local area network among equipment in private cloud, and as shown in Fig. 2, the method for automatically establishing the WIFI-based local area network between the equipment in the private cloud according to the embodiment of the disclosure includes the following processing:
Step 201: a server acquires equipment information reported by a client after the client successfully logs in the server, and stores equipment attribute information and equipment state information of the client according to the equipment information, wherein the equipment attribute information includes an SSID of equipment where the client is installed, type and version information of an intelligent system installed in the equipment and WIFI information; and the equipment state information includes a login state, information about whether the equipment has been in a certain WIFI-based local area network or not and information about whether the equipment is a hotspot in a certain WIFI-based local area network or not.

Optionally, Step 201 specifically includes the following processing:
Step 2011: the server acquires the equipment information reported by the client after the client successfully logs in the server;
Step 2012: the server judges whether the corresponding equipment attribute information has existed or not according to the equipment information, Step 2013 is executed if the corresponding equipment attribute information has existed, otherwise Step 2014 is executed;
Step 2013: the equipment state information corresponding to the equipment attribute information is established according to the equipment information, and the equipment state information is initialized; and
Step 2014: a virtual SSID of the client is generated, the equipment state information corresponding to the equipment attribute information is established according to the equipment information after the equipment attribute information corresponding to the client is locally added, and the equipment state information is initialized.
Step 202: The server judges whether the client can access a WIFI-based local area network which has been established or not according to the equipment information and the state information, controls the client to join the WIFI-based local area network if the client can access a WIFI-based local area network which has been established, otherwise judges whether the client can form a new WIFI-based local area network with other client which has logged in the server but has not accessed any WIFI-based local area network or not, and controls the client to form the new WIFI-based local area network when the server determines that the new WIFI-based local area network can be formed.

Optionally, Step 202 specifically includes the following processing:
Step 2021: the server searches local data to judge whether there is the WIFI-based local area network which has been established or not, Step 2022 is executed if there is the WIFI-based local area network which has been established, otherwise Step 2024 is executed;
Step 2022: the server transmits information of the WIFI-based local area network which has been established to the client to enable the client to join the WIFI-based local area network which has been established, and Step 2023 is executed;
Step 2023: the server receives feedback information from the client, and judges whether the client has successfully joined the WIFI-based local area network which has been established or not according to the feedback information, Step 2025 is executed if the client has successfully joined the WIFI-based local area network which has been established, otherwise Step 2024 is executed;
Step 2024: the server establishes the new WIFI-based local area network; and
Step 2025: the server updates the locally stored equipment state information.

Optionally, Step 2024 in the abovementioned processing steps specifically includes:
Step 20241: the server judges whether the number of a free client is more than or equal to 2 or not, Step 20242 is executed if the number of a free client is more than or equal to 2, otherwise operation is ended, wherein the free client refers to a client which has logged in the server but has not accessed any WIFI-based local area network;
Step 20242: the server controls the client to start own equipment as a WIFI hotspot;
Step 20243: the server judges whether the WIFI hotspot is successfully started or not, Step 20244 is executed if the WIFI hotspot is successfully started, otherwise the operation is ended;
Step 20244: the server transmits WIFI hotspot information to other free client;
Step 20245: the server judges whether there is a free client finding the client through WIFI or not, Step 20246 is executed if there is such a free client, otherwise the operation is ended; and
Step 20246: the server determines a hotspot in the new WIFI-based local area network according to the equipment attribute information, and controls the other free client to join the new WIFI-based local area network.

In Step 20246, the step of controlling the other free client to join the new WIFI-based local area network specifically includes that: the client sends equipment information of the other free client to the server for verification after receiving a from the other free client request message of joining the WIFI-based local area network employing the equipment as a hotspot; if a free client of the other client passes the verification from the server, the client allows the free client to join the WIFI-based local area network employing the equipment as the hotspot, and sends a joining success message to the other free client; and if a free client of the other client does not pass the verification from the server, the client sends a joining failure message to the free client.

Optionally, in the embodiment of the disclosure, when a certain client is required to quit, the following specific processing is required:
Step 203: when the server detects that a certain client wants to quit, the server updates the equipment state information of a related client and the information of a related WIFI-based local area network.

Optionally, Step 203 specifically includes the following processing:
Step 2031: when the server detects that a certain client wants to quit, the quitting client is judged whether to be located in a certain WIFI-based local area network or not, Step 2032 is executed if the quitting client is located in the certain WIFI-based local area network, otherwise Step 2039 is executed;
Step 2032: the server judges whether the quitting client is a hotspot in the certain WIFI-based local area network or not, Step 2033 is executed if the quitting client is a hotspot in the certain WIFI-based local area network, otherwise Step 2038 is executed;
Step 2033: the server judges whether the number of a remaining client in the certain WIFI-based local area network is more than or equal to 2 or not, Step 2034 is executed if the number of the remaining client in the certain WIFI-based local area network is more than or equal to 2, otherwise Step 2036 is executed;
Step 2034: the server determines a new hotspot according to the equipment attribute information of the remaining client, and Step 2035 is executed;
Step 2035: the server constructs a new WIFI-based local area network;
Step 2036: the server updates the equipment state information of the remaining client and the equipment state information of the quitting client, and Step 2037 is executed;
Step 2037: the remaining client is controlled to join the WIFI-based local area network which has been established;
Step 2038: the equipment state information of the quitting client and the information of the certain WIFI-based local area network where the quitting client is located is updated; and
Step 2039: the equipment state information of the quitting client is updated.

The technical solutions of the embodiment of the disclosure are described below with reference to the drawings in detail.

During a practical application, an application program of a server and an application program of a client may be deployed in the server and the client in a private cloud system respectively.

The application program of the server is mainly responsible for management over equipment attribute and state data of the client, logic management over the client to join WIFI-based local area network which has been established, logic management over establishment of a new WIFI-based local area network and interaction with the client. The application program of the client is mainly responsible for reporting of equipment attribute information of the client and for realization of application functions of the equipment such as a WIFI management function, a function of interaction with a user and a data transmission function.

The equipment attribute and state data of the client which are managed by the server are stored in the server, and may be stored in form of database or file. The equipment attribute data mainly includes an SSID of equipment where the client is installed, type and version information of an intelligent system installed in the equipment and WIFI information. The equipment state data mainly includes a login state, information about whether the equipment has been in a certain WIFI-based local area network or not and information about whether the equipment is a hotspot in a certain WIFI-based local area network or not. Fig. 1 is a deployment diagram of the system.

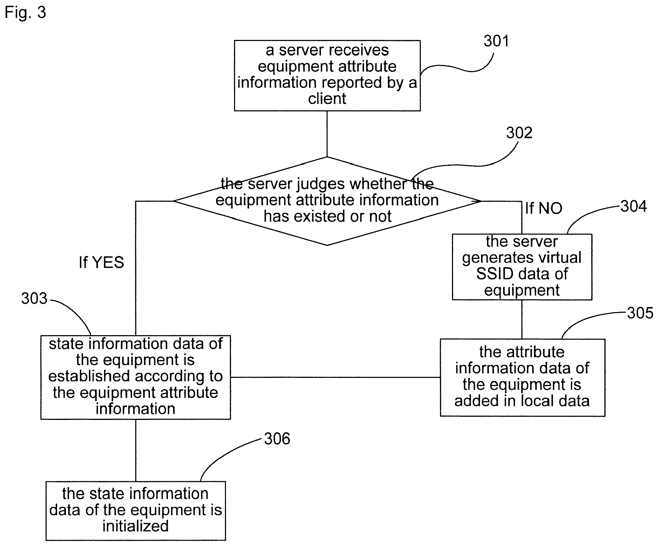

A processing flow of a server after a client successfully logs in the server and reports the equipment attribute information (corresponding to the equipment information) is described below in detail. Fig. 3 is a flowchart of a server processing equipment information reported by a client according to an embodiment of the disclosure, and as shown in Fig. 3, the flow specifically includes the following processing:
Step 301: the server receives equipment attribute information reported by the client.
Step 302: the server judges whether the equipment attribute information has existed or not, Step 303 is executed if the equipment attribute information has existed, otherwise Step 304 is executed. Here, real SSID information of equipment is specifically adopted for searching and confirmation.
Step 303: state information of the equipment is established according to the equipment attribute information, and then Step 306 is executed. For the same equipment, there may be two pieces of related data stored in the server: one is equipment attribute data and the other is equipment state data.
Step 304: the server generates virtual SSID information of the equipment, and simultaneously transmits the virtual SSID information to the client, and the client stores the virtual SSID information in the equipment, which may ensure uniqueness of the equipment in the server as well as uniqueness of the equipment in the local area network.
Step 305: the attribute information data of the equipment is added in local data. When the equipment attribute information is established, priority of the equipment serving as a WIFI hotspot in the local area network is calculated according to information of an intelligent system platform installed in the equipment and a WIFI supporting condition of the equipment.
Step 306: the state information of the equipment is initialized. The equipment state information is the only basis for the server to manage and schedule the local area network of the client in the private cloud. A virtual local area network dataset is formed at the server by virtue of the equipment state information.

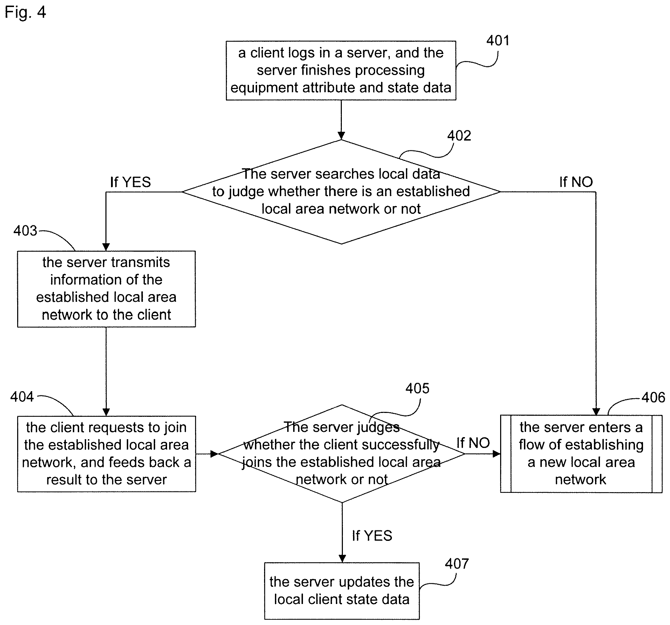

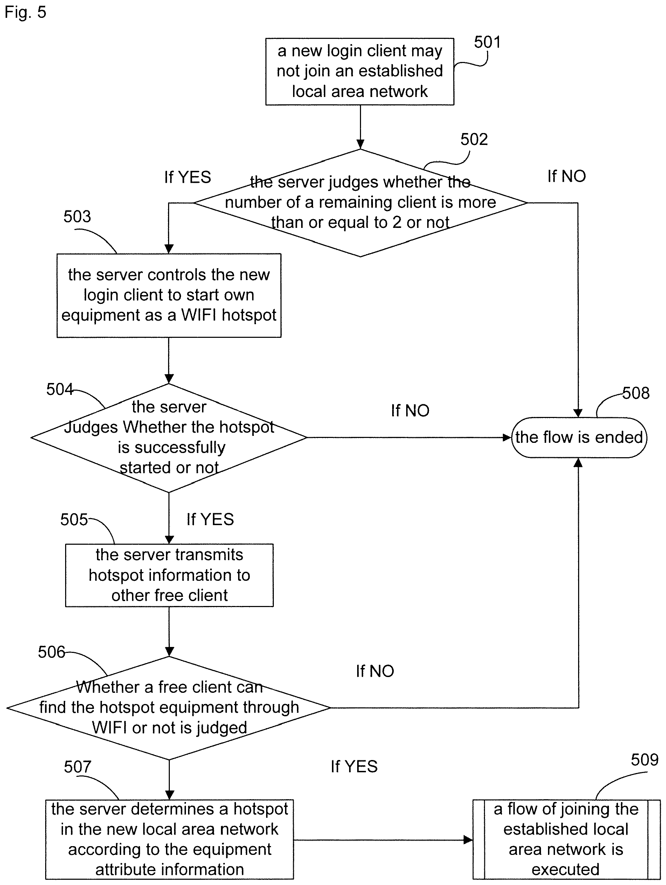

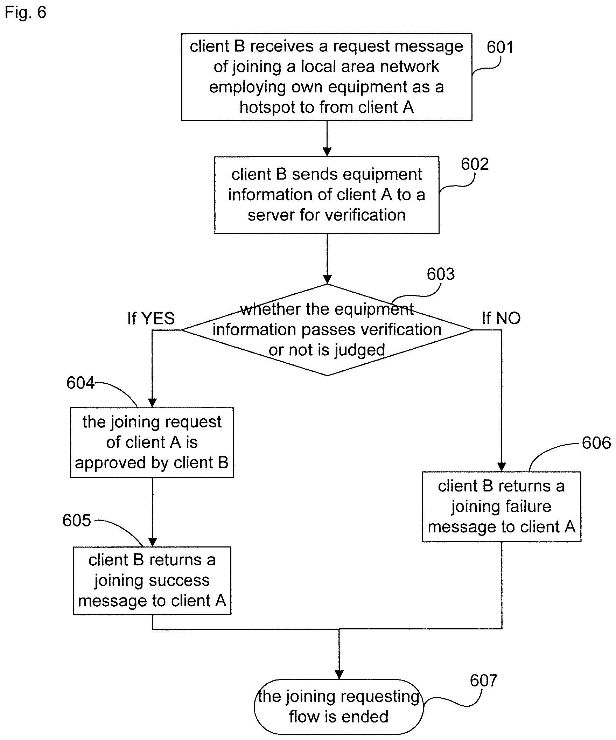

Fig. 4 is a flowchart of a server controlling a client to join an established local area network according to an embodiment of the disclosure, and as shown in Fig. 4, the flow specifically includes the following processing:
Step 401: a client logs in a server, and the server finishes processing attribute and state data of equipment where the client is installed.
Step 402: the server searches local data to judge whether there is an established local area network or not, Step 403 is executed if there is such an established local area network, otherwise Step 406 is executed, wherein the data is searched from local equipment state data of the server.
Step 403: the server transmits information of the established local area network to the client, wherein the information of the established local area network is mainly information of a hotspot in the local area network, and the information of the hotspot includes network SSID (real and virtual) information and hotspot priority.
Step 404: the client requests to join the established local area network, and feeds back a result to the server; the client receives the SSID information and hotspot priority information of the hotspot in the local area network, and searches for equipment with specific SSID information through WIFI according to higher priority to lower priority; and when the equipment is found, the client suspends searching and initiates a joining request, wherein the joining request must contain the virtual SSID information to ensure that the equipment is in private cloud and guarantee uniqueness and accuracy of the target local area network.
Step 405: the server judges whether the client successfully joins the established local area network or not, Step 407 is executed if the client successfully joins the established local area network, otherwise Step 406 is executed. A flow of client A requesting to join a local area network employing client B as a hotspot is shown in Fig. 6.
Step 406: the server enters a flow of establishing a new local area network, specifically as shown in Fig. 5.
Step 407: the server updates state data of the local client.

Fig. 5 is a flowchart of a server controlling clients which have not joined a local area network to form a new local area network according to an embodiment of the disclosure, and as shown in Fig. 5, the flow specifically includes the following processing:
Step 501: a new login client cannot join an established local area network.

In a private environment, the main reason for incapability of joining the established local area network is a limitation of a spatial distance of a WIFI signal. In order to solve the problem, in the embodiment of the disclosure, client equipment is employed as a data acquisition terminal, information is collected in a server, a virtual local area network dataset is constructed in the server at first, and then clients are scheduled to form a real local area network according to the virtual local area network dataset.

Step 502: the server judges whether the number of a remaining client is more than or equal to 2 or not, Step 503 is executed if the number is more than or equal to 2, otherwise the flow is ended. Here, the number of a client is determined according to the number of a client in the virtual local area network dataset in the server.

Step 503: the server controls the new login client to start own equipment as a WIFI hotspot, wherein the server generates a key for access to the WIFI hotspot, and the key is transmitted to the client by the server as a default key for the client to start the hotspot.

Step 504: the server judges whether the hotspot is successfully started or not, Step 505 is executed if the hotspot is successfully started, otherwise the flow is ended.

In order to protect the right of a user, the user may be asked for comments when the hotspot is started.

Step 505: the server transmits hotspot information to other free client.

Step 506: the client searches for equipment through WIFI according to real SSID information of the equipment, and transmits virtual SSID information for verification after the equipment is found, determines that the equipment is successfully found if the information passes verification, and still considers that the target equipment is not found if the equipment is found by the real SSID information but the virtual SSID information does not pass verification. By the verification of the virtual SSID information, the equipment in the private cloud is isolated from external equipment.

Here, if no free client can find the hotspot through WIFI, the flow is ended.

Step 507: the server determines a hotspot in new local area network according to priority of serving as the hotspot in the equipment attribute information, and Step 509 is executed.

Step 508: the flow is ended.

Step 509: a flow of joining the established local area network is executed. The flow is specifically shown in Fig. 4.

Fig. 6 is a processing flowchart of a client when equipment A requests to join a local area network employing equipment B as a hotspot according to an embodiment of the disclosure, and as shown in Fig. 6, the flow specifically includes the following processing:
Step 601: client A initiates a link request to target equipment through real SSID information, wherein the request must contain virtual SSID information of the equipment, and uniqueness of the target equipment is confirmed by virtue of the virtual SSID information. In addition, the request must contain SSID information (real and virtual) of own equipment.
Step 602: client B transmits equipment information of client A to a server for verification. A verification message needs to include the SSID information of client A and the SSID information of client B, and the server may verify the legality of the equipment by virtue of the virtual SSID information in the SSID information and verify legality of a joining request according to the equipment state data of the server.
Step 603: if the verification on the legality of the equipment and the legality of the joining request is successful, the server acquires key information for joining a local area network, and sends the key information to client B, and Step 604 is executed; and if verification on the legality of the equipment and the legality of the joining request fails, the server sends a reply indicating that the client does not pass verification, and Step 606 is executed.
Step 604: client B verifies the key information with a local key after receiving the key information for joining the local area network, the joining request is approved if the key information is verified to be consistent with the local key, and the joining request is disapproved if the key information is verified to be inconsistent with the local key.
Step 605: client B returns a joining success message to client A.
Step 606: client B returns a joining failure message to client A.
Step 607: the joining requesting flow is ended.

In the embodiment of the disclosure, client quitting includes the following four conditions:
1: the client requests to quit a certain local area network;
2: along with a change in a geographical position, the client must quit the local area network due to a limitation of a WIFI signal range, but may not log out;
3: the client logs out; and
4: the client is abnormally lost, wherein the client is considered to be abnormally lost when the client does not send a heartbeat message within an effective time.

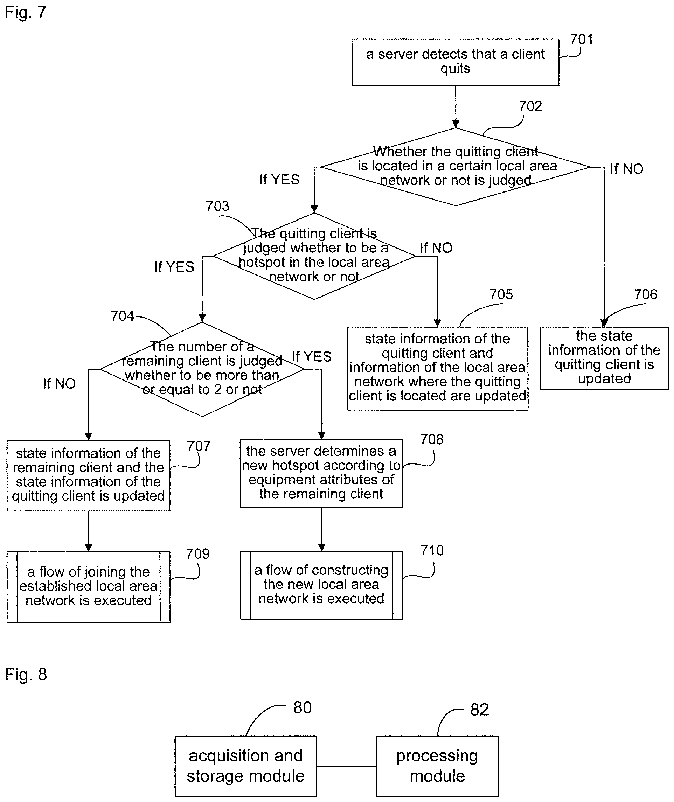

Fig. 7 is a processing flowchart of control of a server in a case of quitting of a client according to an embodiment of the disclosure, and for the client quitting conditions, as shown in Fig. 7, the flow specifically includes the following processing:
Step 701: when a server detects that a client quits, the server needs to find state data of equipment through SSID information of the equipment and update the equipment into an inactive state.
Step 702: the equipment is detected whether to be in a certain local area network or not in the state information of the server according to SSID information of the equipment, Step 703 is executed if the equipment is in a certain local area network, otherwise Step 706 is executed.
Step 703: the quitting client is judged whether to be a hotspot in the local area network or not, Step 704 is executed if it is a hotspot, otherwise Step 705 is executed. Here, the state information of the equipment is searched to judge whether the equipment is the hotspot equipment or not.
Step 704: the number of a remaining client is judged whether to be more than or equal to 2 or not, Step 708 is executed if more than or equal to 2, otherwise Step 707 is executed.

Here, the number of a client is determined according to the number of a client in a virtual local area network dataset in the server.

Step 705: state information of the quitting client and information of the local area network where the quitting client is located is updated, and the flow is ended. The server sets a state in the state data of the equipment to be inactive, and simultaneously updates data of the local area network dataset in the server.

Step 706: the state information of the quitting client is updated, and the flow is ended.

Step 707: state information of the remaining client and the state information of the quitting client is updated, and Step 709 is executed. At this moment, the remaining client becomes a free client, and serves as candidate equipment for constructing a new local area network.

Step 708: the server determines a new hotspot according to equipment attribute of the remaining client, and Step 710 is executed. The new hotspot in the local area network may be determined according to priority of serving as a hotspot in the equipment attribute information.

Step 709: a flow of joining the established local area network is executed. The flow is shown in Fig. 4.

Step 710: a flow of constructing the new local area network is executed. The flow is shown in Fig. 5.

From the above, by the technical solution of the embodiment of the disclosure, the problem that a server is necessary for interaction between clients and a WIFI function of intelligent equipment may not be fully utilized for local area network establishment interaction in an existing private cloud technology is solved, and a system may actively initiate the operation of establishing or joining a local WIFI-based local area network according to a specific actual condition in regardless of a geographical position of the equipment logging in the private cloud as well as a change in the geographical position and guide a user to easily establish the WIFI-based local area network or join the existing WIFI-based local area network.

### Device embodiment

According to the embodiment of the disclosure, a device for automatically establishing a WIFI-based local area network among equipment in private cloud is provided, Fig. 8 is a structure diagram of a device for automatically establishing a WIFI-based local area network among equipment in private cloud, and as shown in Fig. 8, the device for automatically establishing the WIFI-based local area network between the equipment in the private cloud includes: an acquisition and storage module 80 and a processing module 82. Each module of the embodiment of the disclosure is described below in detail.

The acquisition and storage module 80 is configured to acquire equipment information reported by a client after the client successfully logs in a server, and store equipment attribute information and equipment state information of the client according to the equipment information, wherein the equipment attribute information includes an SSID of equipment where the client is installed, type and version information of an intelligent system installed in the equipment and WIFI information; and the equipment state information includes a login state, information about whether the equipment has been in a certain WIFI-based local area network or not and information about whether the equipment is a hotspot in a certain WIFI-based local area network or not.

The acquisition and storage module 80 specifically includes:
an acquisition sub-module, configured to acquire the equipment information reported by the client after the client successfully logs in the server;
a first judgment sub-module, configured to judge whether the corresponding equipment attribute information has existed or not according to the equipment information, call a first processing sub-module if the equipment attribute information has existed, otherwise, call a second processing sub-module;
the first processing sub-module, configured to establish the equipment state information corresponding to the equipment attribute information according to the equipment information, and initialize the equipment state information; and
the second processing sub-module, configured to generate a virtual SSID of the client, establish the equipment state information corresponding to the equipment attribute information according to the equipment information after the equipment attribute information corresponding to the client is locally added, and initialize the equipment state information.

The processing module 82 is configured to judge whether the client can access an WIFI-based local area network which has been established or not according to the equipment information and the state information, control the client to join the WIFI-based local area network if the client can access an WIFI-based local area network which has been established, otherwise judge whether the client can form a new WIFI-based local area network with other client which has logged in the server but has not accessed any WIFI-based local area network or not, and control the client to form the new WIFI-based local area network when the server determines that the new WIFI-based local area network can be formed.

The processing module 82 specifically includes:
a searching sub-module, configured to search local data to judge whether there is the WIFI-based local area network which has been established or not, call a transmission sub-module if the WIFI-based local area network which has been established is found, otherwise call an establishment sub-module;
the transmission sub-module, configured to transmit information of the WIFI-based local area network which has been established to the client to enable the client to join the WIFI-based local area network which has been established, and call a second judgment sub-module;
the second judgment sub-module, configured to receive feedback information from the client, judge whether the client has successfully joined the WIFI-based local area network which has been established or not according to the feedback information, call a first updating sub-module if the client has successfully joined the WIFI-based local area network which has been established, otherwise call the establishment sub-module;
the establishment sub-module, configured to establish the new WIFI-based local area network; and
the first updating sub-module, configured to update the locally stored equipment state information.

The establishment sub-module specifically includes:
a first judgment unit, configured to judge whether the number of a free client is more than or equal to 2 or not, call a first control unit if the number of the free client is more than or equal to 2, otherwise end operation, wherein the free client refers to a client which has logged in the server but has not accessed any WIFI-based local area network;
a first control unit, configured to control the client to start own equipment as a WIFI hotspot;
a second judgment unit, configured to judge whether the WIFI hotspot is successfully started or not, call a transmission unit if the WIFI hotspot is successfully started, otherwise end the operation;
the transmission unit, configured to transmit WIFI hotspot information to other free client;
a third judgment unit, configured to judge whether there is a free client finding the client through WIFI or not, call a second control unit if there is the free client finding the client through WIFI, otherwise end the operation; and
a second control unit, configured to determine a hotspot in the new WIFI-based local area network according to the equipment attribute information, and control other free client to join the new WIFI-based local area network.

The second control unit is specifically configured to: after the client receives request messages of joining the WIFI-based local area network employing the equipment as the hotspot from other free client, receive the equipment information of other free client from the client, perform verification on other free client according to the equipment information of other free client and send a verification result to the client.

The device according to the embodiment of the disclosure further includes:
a quitting module, configured to, when a certain client is detected to quit, update the equipment state information of a related client and the information of a related WIFI-based local area network.

The quitting module specifically includes:
a third judgment sub-module, configured to, when a certain client is detected to quit, judge whether the quitting client is located in a certain WIFI-based local area network or not, call a fourth judgment sub-module if the quitting client is located in a certain WIFI-based local area network, otherwise call a fourth updating sub-module;
the fourth judgment sub-module, configured to judge whether the quitting client is a hotspot in the certain WIFI-based local area network or not, call a fifth judgment sub-module if the quitting client is a hotspot in the certain WIFI-based local area network, otherwise call a third updating sub-module;
the fifth judgment sub-module, configured to judge whether the number of the remaining client in the certain WIFI-based local area network is more than or equal to 2 or not, call a determination sub-module if the number of the remaining client in the certain WIFI-based local area network is more than or equal to 2, otherwise call a second updating sub-module;
the determination sub-module, configured to determine a new hotspot according to the equipment attribute information of the remaining client, and call a construction sub-module;
the construction sub-module, configured to construct a new WIFI-based local area network;
the second updating sub-module, configured to update the equipment state information of the remaining client and the equipment state information of the quitting client, and call a control sub-module;
the control sub-module, configured to control the remaining client to join the WIFI-based local area network which has been established;
the third updating sub-module, configured to update the equipment state information of the quitting client and the information of the certain WIFI-based local area network where the quitting client is located; and
the fourth updating sub-module, configured to update the equipment state information of the quitting client.

A detailed processing process of each module in the embodiment of the disclosure may be understood according to corresponding description in the method embodiment, and will not be repeated here.

Algorithms and illustrations provided here are not fixedly related to any specific computer, virtual system or other equipment. Various universal systems may also be used together with demonstration based on the disclosure. According to the description above, a structure required by construction of such a system is obvious. In addition, the disclosure is also not for any specific programming language. It should be understood that contents of the disclosure may be implemented by virtue of various programming languages, and the above description about a specific language is intended to disclose optimal implementation modes of the disclosure.

A great number of specific details are described in the specification provided here. However, it should be understood that the embodiments of the disclosure may be implemented under the condition of absence of these specific details. In some instances, well-known methods, structures and technologies are not shown in detail, so that fuzziness in understanding of the Specification is avoided.

Similarly, it should be understood that each characteristic of the disclosure is sometimes grouped into a single embodiment, diagram or description thereof in the above description about the schematic embodiments of the disclosure to simplify the disclosure and facilitate understanding of one or more of aspects. However, the method of the disclosure should not be explained to reflect the following intension: the disclosure to be protected requires more characteristics than characteristics clearly recorded in each claim. More specifically, as reflected in the following claims, the invention aspect lies in that it is less than all the characteristics of the single embodiments which are disclosed before. Therefore, claims following specific implementation modes are clearly merged into the specific implementation modes, wherein each Claim is taken as an independent embodiment of the disclosure.

Those skilled in the art should understand that the modules in equipment in the embodiment may be adaptively changed and arranged in one or more different equipment of the embodiment. The modules or units or components in the embodiment may be combined into a module or unit or component, and in addition, they may also be divided into multiple sub-modules or subunits or sub-components. At least some of the characteristics and/or processes or units are mutually excluded, all the characteristics in the Specification (including the accompanying Claims, Abstract and Drawings) and all the processes or units of any method or equipment disclosed here may be freely combined. Unless noted clearly otherwise, each characteristic in the Specification (including the accompanying claims, abstract and drawings) may be replaced with replacement characteristics providing the same, equivalent or similar purposes.

In addition, those skilled in the art should understand that the characteristics of different embodiments may be combined within the scope of the disclosure to form different embodiments although some embodiments described here include some characteristics included in the other embodiments rather than other characteristics. For example, in the following Claims, any one of the embodiments to be protected may be used in a free combination manner.

Each part embodiment of the disclosure may be implemented by hardware, or may be implemented by a software module running on one or more processors, or is implemented by their combinations. Those skilled in the art should understand that some or all functions of some or all parts in the device for automatically establishing the WIFI-based local area network between the equipment in the private cloud according to the embodiment of the disclosure may be practically implemented by virtue of a microprocessor or a Digital Signal Processor (DSP). In the disclosure, equipment or device programs (for example, computer programs and computer program products) configured to execute some or all of the method described here may further be implemented. Such programs for implementing the disclosure may be stored on a computer-readable medium, or may be in form of one or more signals. Such signals may be downloaded from the Internet, or may be provided on carrier signals, or may be provided in any other form.

In Claims, any reference symbol between brackets should not be structured into limits to Claims. The word "include" does not exclude elements of steps unlisted in Claims. The word "a" or "one" before elements does not exclude existence of multiple such elements. The disclosure may be implemented by virtue of hardware including a plurality of different elements and by virtue of a proper programming computer. In the unit claims listing a plurality of devices, multiple of the devices may be specifically implemented by the same hardware item. Usage of words first, second, third and the like does not represent any sequence. These words may be explained as nouns.

### INDUSTRIAL PRACTICABILITY

According to the method and device for automatically establishing the WIFI-based local area network between the equipment in the private cloud in the embodiment of the disclosure, the server acquires the equipment information reported by the client after the client successfully logs in the server, and stores the equipment attribute information and equipment state information of the client according to the equipment; and the server judges whether the client can access the established WIFI-based local area network or not according to the equipment information and the state information, controls the client to join the WIFI-based local area network if the client can access the established WIFI-based local area network, otherwise judges whether the client can form the new WIFI-based local area network with clients which have logged in the server but have not accessed any WIFI-based local area network or not, and controls the client to form the new WIFI-based local area network when the server determines that the new WIFI-based local area network can be formed. By the technical solutions of the embodiment of the disclosure, the problem that a server is necessary for interaction between clients and a WIFI function of intelligent equipment may not be fully utilized for local area network establishment interaction in an existing private cloud technology is solved, and a system may actively initiate the operation of establishing or joining a local WIFI-based local area network according to a specific actual condition in regardless of a geographical position of the equipment logging in the private cloud as well as a change in the geographical position and guide a user to easily establish the WIFI-based local area network or join the existing WIFI-based local area network.

## Claims

1. A method for automatically establishing a Wireless Fidelity, WIFI, -based local area network among equipment in private cloud, **characterized by** comprising:
Step 1: acquiring (201), by a server, equipment information reported by a client after the client successfully logs in the server, and storing equipment attribute information and equipment state information of the client according to the equipment information, wherein the equipment attribute information comprises a Service Set Identifier, SSID, of equipment where the client is installed, type and version information of an intelligent system installed in the equipment and WIFI information, and wherein the equipment state information comprises a login state, information about whether the equipment has been in a certain WIFI-based local area network or not and information about whether the equipment is a hotspot in a certain WIFI-based local area network or not; and
Step 2: judging (202), by the server, whether the client has ability to access a WIFI-based local area network which has been established or not according to the equipment information and the state information, and controlling the client to join the WIFI-based local area network if the client has ability to access the WIFI-based local area network which has been established, otherwise judging whether the client has ability to form a new WIFI-based local area network with other client which has logged in the server but has not accessed any WIFI-based local area network or not, and controlling the client to form the new WIFI-based local area network when the server determines that the client has the ability to form the new WIFI-based local area network,
wherein the Step 2 comprises:
Step 21: searching, by the server, local data to judge whether there is the WIFI-based local area network which has been established or not, executing Step 22 if there is the WIFI-based local area network which has been established, otherwise executing Step 24;
Step 22: transmitting, by the server, information of the WIFI-based local area network which has been established to the client to enable the client to join the WIFI-based local area network which has been established, and executing Step 23;
Step 23: receiving, by the server, feedback information from the client, judging whether the client has successfully joined the WIFI-based local area network which has been established or not according to the feedback information, executing Step 25 if the client has successfully joined the WIFI-based local area network which has been established, otherwise executing Step 24;
Step 24: establishing, by the server, the new WIFI-based local area network; and
Step 25: updating, by the server, the equipment state information stored locally.

2. The method according to claim 1, wherein the Step 1 (201) comprises:
Step 11: acquiring (301), by the server, the equipment information reported by the client after the client successfully logs in the server;
Step 12: judging (302), by the server, whether the equipment attribute information has existed or not according to the equipment information, executing Step 13 if the equipment attribute information has existed, otherwise executing Step 14;
Step 13: establishing (303) the equipment state information corresponding to the equipment attribute information according to the equipment information, and initializing the equipment state information; and
Step 14: generating (304) a virtual Service Set Identifier, SSID, of the client, establishing the equipment state information corresponding to the equipment attribute information according to the equipment information after the equipment attribute information corresponding to the client is locally added, and initializing the equipment state information.

3. The method according to claim 1, wherein the Step 24 comprises:
Step 241: judging (502), by the server, whether the number of a free client is more than or equal to 2 or not, executing Step 242 if the number of the free client is more than or equal to 2, otherwise ending operation, wherein the free client refers to a client which has logged in the server but has not accessed any WIFI-based local area network;
Step 242: controlling (503), by the server, the client to start the equipment where the client is installed as a WIFI hotspot;
Step 243: judging (504), by the server, whether the WIFI hotspot is successfully started or not, executing Step 244 if the WIFI hotspot is successfully started, otherwise ending the operation;
Step 244: transmitting (505), by the server, WIFI hotspot information to other free client;
Step 245: judging (506), by the server, whether there is a free client finding the client through WIFI or not, executing Step 246 if there is the free client finding the client through WIFI, otherwise ending the operation; and
Step 246: determining (507), by the server, a hotspot in the new WIFI-based local area network according to the equipment attribute information, and controlling the other free client to join the new WIFI-based local area network.

4. The method according to claim 3, wherein the step of controlling the other free client to join the new WIFI-based local area network comprises:
Sending (602), by the client, equipment information of the other free client to the server for verification after receiving from the other free client a request message of joining the WIFI-based local area network employing the equipment as a hotspot;
if a free client of the other free client passes the verification from the server (603), allowing (604), by the client, the free client to join the WIFI-based local area network employing the equipment as the hotspot, and sending a joining success message to the other free client (605); and
if the free client of the other free client does not pass the verification from the server, sending (606), by the client, a joining failure message to the free client.

5. The method according to claim 1, further comprising:
Step 3: when the server detects that a certain client wants to quit, updating (407), by the server, equipment state information of a related client and information of a related WIFI-based local area network.

6. The method according to claim 5, wherein the Step 3 comprises:
Step 31: when the server detects that the certain client wants to quit, judging whether the quitting client is located in a certain WIFI-based local area network or not (702), executing Step 32 if the quitting client is located in a certain WIFI-based local area network, otherwise executing Step 39;
Step 32: judging (703), by the server, whether the quitting client is a hotspot in the certain WIFI-based local area network or not, executing Step 33 if the quitting client is a hotspot in the certain WIFI-based local area network, otherwise executing Step 39;
Step 33: judging (704), by the server, whether the number of a remaining client in the certain WIFI-based local area network is more than or equal to 2 or not, executing Step 34 if the number of the remaining client in the certain WIFI-based local area network is more than or equal to 2, otherwise executing Step 36;
Step 34: determining (708), by the server, a new hotspot according to equipment attribute information of the remaining client, and executing Step 35;
Step 35: constructing (710), by the server, a new WIFI-based local area network;
Step 36: updating (707), by the server, equipment state information of the remaining client and equipment state information of the quitting client, and executing Step 37;
Step 37: controlling (709) the remaining client to join the new WIFI-based local area network which has been established;
Step 38: updating (705) the equipment state information of the quitting client and the information of the certain WIFI-based local area network where the quitting client is located; and
Step 39: updating (706) the equipment state information of the quitting client.

7. A server for automatically establishing a Wireless Fidelity, WIFI, -based local area network among equipment in private cloud, **characterized by** comprising:
an acquisition and storage module (80), configured to acquire equipment information reported by a client after the client successfully logs in the server, and store equipment attribute information and equipment state information of the client according to the equipment information, wherein the equipment attribute information comprises a Service Set Identifier, SSID, of equipment where the client is installed, type and version information of an intelligent system installed in the equipment and WIFI information, and wherein the equipment state information comprises a login state, information about whether the equipment has been in a certain WIFI-based local area network or not and information about whether the equipment is a hotspot in a certain WIFI-based local area network or not; and
a processing module (82), configured to judge whether the client has ability to access an WIFI-based local area network which has been established or not according to the equipment information and the state information, control the client to join the WIFI-based local area network if the client has ability to access the WIFI-based local area network which has been established, otherwise judge whether the client has ability to form a new WIFI-based local area network with other client which has logged in the server but has not accessed any WIFI-based local area network or not, and control the client to form the new WIFI-based local area network when the server determines that the client has the ability to form the new WIFI-based local area network,
wherein the processing module comprises:
a searching sub-module, configured to search local data to judge whether there is the WIFI-based local area network which has been established or not, call a transmission sub-module if the WIFI-based local area network which has been established is found, otherwise call an establishment sub-module;
the transmission sub-module, configured to transmit information of the WIFI-based local area network which has been established to the client to enable the client to join the WIFI-based local area network which has been established, and call a second judgment sub-module;
the second judgment sub-module, configured to receive feedback information from the client, judge whether the client has successfully joined the WIFI-based local area network which has been established or not according to the feedback information, call a first updating sub-module if the client has successfully joined the WIFI-based local area network which has been established, otherwise call the establishment sub-module;
the establishment sub-module, configured to establish the new WIFI-based local area network; and
the first updating sub-module, configured to update the equipment state information stored locally.

8. The server according to claim 7, wherein the acquisition and storage module comprises:
an acquisition sub-module, configured to acquire the equipment information reported by the client after the client successfully logs in the server;
a first judgment sub-module, configured to judge whether the equipment attribute information has existed or not according to the equipment information, call a first processing sub-module if the equipment attribute information has existed, otherwise call a second processing sub-module;
the first processing sub-module, configured to establish the equipment state information corresponding to the equipment attribute information according to the equipment information, and initialize the equipment state information; and
the second processing sub-module, configured to generate a virtual SSID of the client, establish the equipment state information corresponding to the equipment attribute information according to the equipment information after the equipment attribute information corresponding to the client is locally added, and initialize the equipment state information.

9. The server according to claim 7, wherein the establishment sub-module comprises:
a first judgment unit, configured to judge whether the number of a free client is more than or equal to 2 or not, call a first control unit if the number of the free client is more than or equal to 2, otherwise end operation, wherein the free client refers to a client which has logged in the server but has not accessed any WIFI-based local area network;
a first control unit, configured to control the client to start the equipment where the client is installed as a WIFI hotspot;
a second judgment unit, configured to judge whether the WIFI hotspot is successfully started or not, call a transmission unit if the WIFI hotspot is successfully started, otherwise end the operation;
the transmission unit, configured to transmit WIFI hotspot information to other free client;
a third judgment unit, configured to judge whether there is a free client finding the client through WIFI or not, call a second control unit if there is the free client finding the client through WIFI, otherwise end the operation; and
a second control unit, configured to determine a hotspot in the new WIFI-based local area network according to the equipment attribute information, and control the other free client to join the new WIFI-based local area network.

10. The server according to claim 9, wherein the second control unit is specifically configured to after the client receives from the other free client a request message of joining the WIFI-based local area network employing the equipment as a hotspot, receive equipment information of the other free client from the client, perform verification on the other free client according to the equipment information of the other free client and send a verification result to the client.

11. The server according to claim 7, further comprising:
a quitting module, configured to, when a certain client is detected to quit, update equipment state information of a related client and information of a related WIFI-based local area network.

12. The server according to claim 11, wherein the quitting module comprises:
a third judgment sub-module, configured to, when the certain client is detected to quit, judge whether the quitting client is located in a certain WIFI-based local area network or not, call a fourth judgment sub-module if the quitting client is located in a certain WIFI-based local area network, otherwise call a fourth updating sub-module;
the fourth judgment sub-module, configured to judge whether the quitting client is a hotspot in the certain WIFI-based local area network or not, call a fifth judgment sub-module if the quitting client is a hotspot in the certain WIFI-based local area network, otherwise call a third updating sub-module;
the fifth judgment sub-module, configured to judge whether the number of a remaining client in the certain WIFI-based local area network is more than or equal to 2 or not, call a determination sub-module if the number of the remaining client in the certain WIFI-based local area network is more than or equal to 2, otherwise call a second updating sub-module;
the determination sub-module, configured to determine a new hotspot according to equipment attribute information of the remaining client, and call a construction sub-module;
the construction sub-module, configured to construct a new WIFI-based local area network;
the second updating sub-module, configured to update equipment state information of the remaining client and equipment state information of the quitting client, and call a control sub-module;
the control sub-module, configured to control the remaining client to join the new WIFI-based local area network which has been established;
the third updating sub-module, configured to update the equipment state information of the quitting client and the information of the certain WIFI-based local area network where the quitting client is located; and
the fourth updating sub-module, configured to update the equipment state information of the quitting client.

## Patentansprüche

1. Verfahren zum automatischen Einrichten eines Wireless Fidelity, WIFIbasierten lokalen Netzwerks zwischen Geräten in einer privaten Cloud, **gekennzeichnet durch** die folgenden Schritte:
Schritt 1: Erfassen (201) von Geräteinformationen durch einen Server, die von einem Kunden gemeldet werden, nachdem der Kunde erfolgreich in dem Server eingeloggt und Geräteeigenschafts-Informationen sowie Gerätezustands-Informationen des Kunden entsprechend den Geräteinformationen gespeichert hat, wobei die Geräteeigenschafts-Informationen einen Service Set Identifier SSID, der Geräte umfaßt, wo der Kunde installiert ist, des weiteren Typ und Ausführungsinformationen eines intelligenten Systems, das in den Geräten installiert ist, sowie WIFI -Informationen, wobei die Gerätezustands-Informationen einen Login-Zustand umfassen, die Informationen darüber, ob die Geräte in einem bestimmten WIFI -basierten, lokalen Bereichs-Netzwerk gefunden oder nicht, sowie Informationen darüber, ob die Geräte sich in einem Hotspot in einem WIFI -basierten lokalen Bereichs-Netzwerk befinden oder nicht; und
Schritt 2: Beurteilen (202) mit Hilfe des Servers, ob der Kunde in der Lage ist, Zugang zu einem WIFI -basierten, lokalen Bereichs-Netzwerk, das errichtet worden ist, zu haben oder nicht, und zwar gemäß den Geräteinformationen und den Zustandsinformationen, und Steuern des Kunden, um sich mit dem WIFI -basierten, lokalen Bereichsnetzwerk zu verbinden, wenn der Kunde die Möglichkeit zum Zugang zu WIFI -basierten, lokalen Bereichsnetzwerk zu erhalten, das errichtet worden ist, anderenfalls, Beurteilen, ob der Kunde befähigt ist, ein neues WIFI -basiertes, lokales Bereichsnetzwerk mit einem anderen Kunden zu schaffen, der sich in den Server eingeloggt hat, jedoch keinen Zugang zu irgendeinem WIFI -basierten, lokalen Bereichsnetzwerk erhalten hat oder nicht und Steuern des Steuern des Kunden zur Bildung des neuen WIFI -basierten, lokalen Bereichsnetzwerks, wenn der Server feststellt, daß der Kunde die Möglichkeit hat, das neue WIFI -basierte, lokale Bereichsnetzwerk zu bilden,
wobei der Schritt 2 folgendes umfaßt:
Schritt 21: Suchen mit Hilfe des Servers nach lokalen Daten, um zu beurteilen, ob es das WIFI -basierte, lokale Bereichsnetzwerk gibt, das berichtet worden ist oder nicht, Durchführen von Schritt 22, wenn das WIFI -basierte, lokale Bereichsnetzwerk da ist, das errichtet worden ist, anderenfalls Durchführen des Schrittes 24;
Schritt 22: Übermitteln mit Hilfe des Servers von Infomationen des WIFI - basierten, lokalen Bereichsnetzwerks, das errichtet worden ist, an den Kunden, um diesen in die Lage zu versetzen, sich mit dem WIFI -basierten, lokalen Bereichsnetzwerk, das errichtet worden ist, zu verbinden, und Durchführen des Schrittes 23;
Schritt 23: Empfangen mit Hilfe des Servers von Feedback-Informationen von dem Kunden, Beurteilen, ob der Kunde sich erfolgreich mit dem WIFI - basierten, lokalen Bereichsnetzwerk, das errichtet worden ist, verbunden hat oder nicht, und zwar gemäß der Feedback-Information, Ausführen des Schrittes 25, wenn der Kunde sich erfolgreich mit dem WIFI -basierten, lokalen Bereichsnetzwerk verbunden hat, das errichtet worden ist, anderenfalls Ausführen des Schrittes 24;
Schritt 24: Errichten mit Hilfe des Servers des WIFI -basierten, lokalen Bereichsnetzwerks; und
Schritt 25: Mit Hilfe des Servers Updaten der Gerätezustands-Information, die lokal gespeichert ist.

2. Verfahren nach Anspruch 1, **dadurch gekennzeichnet, daß** der Schritt 1 (201) folgendes umfaßt:
Schritt 11: Erfassen (301) mit Hilfe des Servers der Geräteinformation, die von dem Kunden berichtet wird, nachdem der Kunde sich erfolgreich in den Server eingeloggt hat;
Schritt 12: Beurteilen (302) mit Hilfe des Servers, ob die Geräteeigenschafts-Information vorhanden gewesen ist oder nicht; und zwar gemäß der Geräteinfomation, Ausführen des Schrittes 13, wenn die Geräteeigenschafts-Information existiert hat, anderenfalls Durchführen des Schrittes 14;
Schritt 12: Beschaffen (303) der Gerätezustands-Information entsprechend der Geräteeigenschafts-Information gemäß der Geräteinformation und Anfangen mit der Gerätezustands-Information;
Schritt 13: Aufstellen (303) der Gerätezustands-Information entsprechend der Geräteeigenschafts-Information gemäß der Geräteinformation, und Initiieren der Gerätezustands-Information, und
Schritt 14: Schaffen (304) eines virtuellen Service Set Identifiers, SSID, des Kunden,
Aufstellen der Gerätezustands-Information entsprechend der Geräteeigenschafts-Information, gemäß der Geräteinformation, nachdem die Geräteeigenschafts-Information, die dem Kunden entspricht, lokal hinzugefügt worden ist, und Initiieren der Gerätezustands-Information.

3. Verfahren nach Anspruch 1, **dadurch gekennzeichnet, daß** der Schritt 24 folgendes umfaßt:
Schritt 241: Beurteilen (502) durch den Server, ob die Zahl eines freien Kunden mehr als oder gleich 2 beträgt oder nicht, Ausführen des Schrittes 242, wenn die Zahl der freien Kunden mehr oder gleich 2 ist, sonst Beenden des Vorgangs, wobei der freie Kunden sich auf einen Kunden bezieht, der in dem Server eingeloggt ist, jedoch keinen Zugang zu irgendeinem WIFI -basierten, lokalen Bereichsnetzwerk hat;
Schritt 242: Steuern (503) durch den Server, damit der Kunde die Geräte startet, wo der Kunde als ein WIFI -Hotspot installiert ist;
Schritt 243: Beurteilen (504) den durch Server, ob der WIFI -Hotspot gestartet ist oder nicht, Ausführen des Schrittes 244, der WIFI -Hotspot erfolgreich gestartet ist, anderenfalls Beenden des Vorgangs;
Schritt 244: Übertragen (505) durch den Server der WIFI -Hotspot-Information zu anderen freien Kunden;
Schritt 245: Beurteilen (506) durch den Server, ob es einen freien Kunden gibt, der den Kunden über das WIFI findet oder nicht, Durchführen des Schrittes 246, wenn es den freien Kunden gibt, der den Kunden über das WIFI findet, anderenfalls Beenden des Vorgangs; und
Schritt 246: Bestimmen (507) durch den Server eines Hotspots in dem neuen WIFI -basierten, lokalen Bereichsnetzwerk gemäß der Geräteeigenschafts-Information und Steuern des anderen freien Kunden, um sich dem neuen WIFI -basierten, lokalen Bereichsnetzwerk anzuschließen.

4. Verfahren nach Anspruch 3, **dadurch gekennzeichnet, daß** der Schritt des Steuerns des anderen freien Kunden, um sich dem neuen WIFI -basierten, lokalen Bereichsnetzwerk anzuschließen, folgendes umfaßt:
Durch den Kunden Senden (602) einer Geräteinformation des anderen freien Kunden an den Server zwecks Verifikation, nachdem von dem anderen freien Kunden eine Aufforderungsnachricht erhalten wurde, sich dem WIFI - basierten, lokalen Bereichsnetzwerk anzuschließen, und zwar unter Benutzung des Gerätes als ein Hotspot;
Wenn ein freier Kunde des anderen freien Kunden die Verifikation von dem Server (602) durchläßt, Ermöglichen (604) durch den Kunden, dem freien Kunden, dem WIFI -basierten, lokalen Bereichsnetzwerk beizutreten, und zwar unter Benutzung des Gerätes als Hotspot, und Senden einer Beitrittserfolgsnachricht an den anderen freien Kunden (605); und
Wenn der freie Kunde des anderen freien Kunden die Verifikation von dem Server nicht durchläßt, Senden (606) durch den Kunden einer Nachricht an den freien Kunden, daß die Verbindung nicht erfolgt ist.

5. Verfahren nach Anspruch 1, ferner **gekennzeichnet durch** Schritt 3: wenn der Server feststellt, daß ein bestimmter Kunde das Netz verlassen möchte, Updaten (407) durch den Server, der Gerätezustands-Information eines entsprechenden Kunden und Information an ein diesbezügliches WIFI - basiertes, lokales Bereichsnetzwerk.

6. Verfahren nach Anspruch 5, wobei Schritt 3 folgendes umfaßt:
Schritt 31: wenn der Server feststellt, daß der bestimmte Kunde das Netz verlassen will, Beurteilen, ob der weggehende Kunde sich in einem bestimmten WIFI -basierten, lokalen Bereichsnetzwerk befindet oder nicht (702), Ausführen des Schrittes 32, wenn der weggehende Kunde sich in einem bestimmten WIFI -basierten, lokalen Bereichsnetzwerk befindet, anderenfalls Ausführen des Schrittes 39;
Schritt 32: Beurteilen (703) mit Hilfe des Servers, ob der weggehende Kunde in dem bestimmten WIFI -basierten, lokalen Bereichsnetzwerk ein Hotspot ist oder nicht, Ausführen des Schrittes 33, wenn der weggehende Kunde in dem WIFI -basierten, lokalen Bereichsnetzwerk ein Hotspot ist;
Schritt 33: Beurteilen (704) durch den Server, ob die Zahl eines verbleibenden Kunden in dem bestimmten WIFI -basierten, lokalen Bereichsnetzwerk mehr oder gleich 2 beträgt oder nicht, Ausführen des Schrittes 34, wenn die Zahl des verbleibenden Kunden in dem bestimmten WIFI -basierten, lokalen Bereichsnetzwerk größer oder gleich 2 ist, andernfalls Ausführen des Schrittes 36;
Schritt 34: Bestimmen (703) mit Hilfe des Servers eines neuen Hotspots gemäß der Geräteeigenschafts-Information des verbleibenden Kunden und Ausführen des Schrittes 35;
Schritt 35: Aufbau (710) mit Hilfe des Servers eines neuen WIFI -basierten, lokalen Bereichsnetzwerks;
Schritt 36: Updaten (707) mit Hilfe des Servers der Gerätezustands-Information des verbleibenden Kunden und der Gerätezustands-Information des weggehenden Kunden und Durchführen des Schrittes 37;
Schritt 37: Steuern (709) des verbleibenden Kunden zum Beitritt in das neue WIFI -basierte, lokale Bereichsnetzwerk, das hergestellt worden ist;
Schritt 38: Updaten (705) der Gerätezustands-Information des weggehenden Kunden und der Information des bestimmten WIFI -basierten, lokalen Bereichsnetzwerk, wo sich der weggehende Kunde befindet; und
Schritt 39: Updaten (706) der Gerätezustands-Information des weggehenden Kunden.

7. Server zum automatischen Einrichten eines Wireless Fidelity WIFI - basierten, lokalen Bereichsnetzwerks zwischen Geräten in einer privaten Cloud, **gekennzeichnet durch**
einen Akquisitions- und Speicher-Modul (80), der so gebaut ist, daß er Geräteinformationen erfaßt, die von einem Kunden berichtet werden, nachdem der Kunde erfolgreich sich in den Server eingeloggt hat, sowie Speichergeräteeigenschafts-Informationen und Gerätezustands-Informationen des Kunden gemäß den Geräteinformationen, wobei die Geräteeigenschafts-Informationen einen Service Set Identifier, SSID, des Gerätes betreffen, wo der Kunde installiert ist, sowie
Informationen hinsichtlich Typ und Ausführung eines intelligenten Systems, das in dem Gerät installiert ist, und WIFI -Informationen, und wobei die Gerätezustands-Information einen Login-Zustand beinhaltet, sowie Informationen darüber, ob das Gerät in einem bestimmten WIFI -basierten, lokalen Bereichsnetzwerk gewesen ist oder nicht, und Informationen darüber, ob das Gerät ein Hotspot in einem bestimmten WIFI -basierten, lokalen Bereichsnetzwerk ist oder nicht; und
einen Prozeßmodul (82), der so gebaut ist, daß beurteilt werden kann, ob der Kunde eine Möglichkeit zum Zugang zu einem WIFI -basierten, lokalen Bereichsnetzwerk, das errichtet worden ist, hat oder nicht, und zwar gemäß der Geräteinformation und der Zustandsinformation, um des weiteren den Kunden zu steuern, um sich mit dem WIFI -basierten, lokalen Bereichsnetzwerk zu verbinden, wenn der Kunde dem WIFI -basierten, lokalen Bereichsnetzwerk beitreten kann, das errichtet worden ist, sonst zu Beurteilen, ob der Kunde die Möglichkeit hat, ein neues WIFI -basiertes, lokales Bereichsnetzwerk mit einem anderen Kunden zu bilden, der in den Server eingeloggt hat, jedoch keinem WIFI -basierten, lokalen Bereichsnetzwerk beigetreten ist oder nicht, und den Kunden zu steuern, um ein neues WIFI -basierten, lokalen Bereichsnetzwerk zu bilden, wenn der Server feststellt, daß der Kunde die Möglichkeit hat, das neue WIFI -basierte, lokale Bereichsnetzwerk zu errichten,
wobei der Prozeßmodul folgendes umfaßt:
einen suchenden Submodul, der so gebaut ist, daß lokale Daten gesucht werden, um zu beurteilen, ob es ein WIFI -basiertes, lokales Bereichsnetzwerk gibt, das errichtet worden ist oder nicht, wobei ein Übermittlungs-Submodul angerufen wird, wenn das WIFI -basierte, lokale Bereichsnetzwerk, das errichtet worden ist, gefunden wurde, und wenn nicht, eine Errichtung des Submoduls veranlaßt wird;
wobei der Übertragungs-Submodul so gebaut ist, daß Informationen des WIFI -basierten, lokalen Bereichsnetzwerks, das errichtet worden ist, an den Kunden übertragen werden, um dem Kunden zu ermöglichen, dem WIFI - basierten, lokalen Bereichsnetzwerk, das errichtet worden ist, beizutreten, und daß ein zweiter Beurteilungs-Submodul angerufen wird, wobei dieser zweite Beurteilungs-Submodul gebaut ist, um Feedback-Informationen von dem Kunden zu empfangen, zu beurteilen, ob der Kunde erfolgreich dem WIFI -basierten, lokalen Bereichsnetzwerk, das errichtet worden ist, beigetreten ist oder nicht, und zwar gemäß der Feedback-Information, wobei ferner ein erstes Updatungs-Submodul angerufen wird, wenn der Kunde dem WIFI -basierten, lokalen Bereichsnetzwerk, das errichtet worden ist, beigetreten ist und wenn nicht der Errichtungs-Submodul angerufen wird;
wobei der Errichtungs-Submodul dazu dient, das WIFI -basierte, lokale Bereichsnetzwerk zu errichten; und
das erste Updatungs-Submodul dazu dient, die lokal gespeicherte Errichtungszustands-Information zu aktualisieren.

8. Server nach Anspruch 7, **dadurch gekennzeichnet, daß** der Akquisitions- und Speichermodul folgendes umfaßt:
einen Akquisitions-Submodul, der dazu dient, die von dem Kunden, nachdem der Kunde erfolgreich in den Server eingeloggt ist, berichtete Geräteinformation zu erfassen;
einen ersten Beurteilungs-Submodul, der dazu dient zu beurteilen, ob die Geräteeigenschafts-Information gemäß der Geräteinformation existiert hat oder nicht und einen ersten Prozeß-Submodul anzurufen, wenn die Geräteeigenschafts-Information existiert hat und wenn nicht, einen zweiten Prozeß-Submodul anzurufen;
wobei der erste Prozeß-Submodul dazu dient, die Gerätezustands-Information entsprechend der Geräteeigenschafts-Information gemäß der Geräteinformation aufzustellen und die Gerätezustands-Information einzuleiten; und
der zweite Prozeß-Submodul dazu dient, eine virtuelle SSID des Kunden zu erzeugen, die Gerätezustands-Information aufzustellen, und zwar entsprechend der Geräteeigenschafts-Information gemäß der Geräte-Information, nachdem die Geräteeigenschafts-Information dem Kunden entsprechend lokal hinzugefügt ist, und die Gerätezustands-Information zu initialisieren.

9. Server nach Anspruch 7, **dadurch gekennzeichnet, daß** der Errichtungs-Submodul folgendes aufweist:
eine erste Beurteilungseinheit, die dazu dient zu beurteilen, ob die Zahl eines freien Kunden größer oder gleich 2 ist oder nicht, eine erste Steuereinheit anzurufen, wenn die Zahl des freien Kunden größer ist als 2 oder gleich 2 ist, anderenfalls den Vorgang zu beenden, wobei der freie Kunde sich auf einen Kunden bezieht, der in dem Server eingeloggt ist, jedoch keinerlei Zugang zu dem WIFI-basierten, lokalen Bereichsnetzwerk gehabt hat;
ferner umfassend eine erste Steuereinheit, die dazu dient, den Kunden zu steuern, um das Gerät zu starten, wo der Kunde als ein WIFI -Hotspot installiert ist;
des weiteren umfassend eine zweite Beurteilungseinheit, die dazu dient zu beurteilen, ob der WIFI -Hotspot erfolgreich gestartet wurde oder nicht, und eine Übertragungseinheit anzurufen, wenn der WIFI -Hotspot erfolgreich gestartet ist, wenn nicht, den Vorgang zu beenden;
des weiteren umfassend eine Übertragungseinheit, die dazu dient, die WIFI - Hotspot-Information zu dem anderen freien Kunden zu übertragen;
des weiteren eine dritte Beurteilungseinheit, die dazu dient zu beurteilen, ob einen freien Kunden gibt, der den Kunden durch das WIFI findet, oder nicht, sowie eine zweite Steuereinheit anzurufen, wenn es den freien Kunden gibt, der den Kunden durch das WIFI findet, wenn nicht, den Vorgang zu beenden; und schließlich umfassend
eine zweite Steuereinheit, die dazu dient, einen Hotspot in dem WIFI - basierten, lokalen Bereichsnetzwerk gemäß der Geräteeigenschafts-Information zu bestimmen und den anderen freien Kunden dahingehend zu steuern, daß er dem neuen WIFI -basierten, lokalen Bereichsnetzwerk beitritt.

10. Server nach Anspruch 9, **dadurch gekennzeichnet, daß** die zweite Steuereinheit speziell so gebaut ist, daß nachdem der Kunde von dem anderen freien Kunden eine Aufforderungs-Nachricht erhalten hat, dem WIFI - basierten, lokalen Bereichsnetzwerk beizutreten, das Gerät wie ein Hotspot verwendet wird, wobei die Geräteinformation des anderen freien Kunden von dem Kunden empfangen wird, eine Verifikation des anderen freien Kunden bezüglich der Geräteinformation des anderen freien Kunden durchgeführt wird und das Verifikationsergebnis dem Kunden gesendet wird.

11. Server nach Anspruch 7, ferner **gekennzeichnet durch** einen Beendungsmodul, der dazu dient, daß dann, wenn bei einem bestimmten Kunden festgestellt wird, daß er das Netzwerk verlassen will, eine Gerätezustands-Information eines betreffenden Kunden sowie eine Information über ein diesbezügliches WIFI -basiertes, lokales Bereichsnetzwerk aktualisiert wird.

12. Server nach Anspruch 11, **dadurch gekennzeichnet, daß** das Beendungsmodul folgendes aufweist:
einen dritten Beurteilungs-Submodul, der so gebaut ist, daß dann, wenn festgestellt wird, daß der bestimmte Kunde das Netzwerk verläßt, beurteilt wird, ob das Verlassen des Kunden in einem bestimmten WIFI -basierten, lokalen Bereichsnetzwerk liegt oder nicht, und
ein vierter Beurteilungs-Submodul aufgerufen wird, wenn der weggehende Kunde in einem bestimmten WIFI -basierten, lokalen Bereichsnetzwerk liegt und wenn nicht, ein viertes Aktualisierungs-Submodul angerufen wird,
wobei das vierte Beurteilungs-Submodul dazu dient zu beurteilen, ob der weggehende Kunde ein Hotspot in dem bestimmten WIFI -basierten, lokalen Bereichsnetzwerk ist oder nicht und ein fünftes Beurteilungs-Submodul aufgerufen wird, wenn der weggehende Kunde in dem bestimmten WIFI - basierten, lokalen Bereichsnetzwerk ein Hotspot ist, anderenfalls ein drittes Aktualisierungs-Submodul angerufen wird;
wobei des weiteren das fünfte Beurteilungs-Submodul dazu dient zu beurteilen, ob die Zahl eines verbleibenden Kunden in dem bestimmten WIFI - basierten, lokalen Bereichsnetzwerk größer als oder gleich 2 ist oder nicht, und ein Feststellungs-Submodul angerufen wird, wenn die Zahl des verbleibenden Kunden in dem bestimmten WIFI -basierten, lokalen Bereichsnetzwerk größer als oder gleich 2 ist, und wenn nicht, ein zweites Aktualisierungsmodul angerufen wird;
wobei das Feststellungs-Submodul dazu dient, einen neuen Hotspot entsprechend der Geräteeigenschafts-Information des verbleibenden Kunden zu bestimmen und einen Konstruktions-Submodul anzurufen,
wobei dieser Konstruktions-Submodul so gebaut ist, um ein neues WIFI - basiertes, lokales Bereichsnetzwerk zu schaffen;
wobei des weiteren das zweite Aktualisierungs-Submodul dazu dient, die Gerätezustands-Information des verbleibenden Kunden und die Gerätezustands-Information des weggehenden Kunden zu aktualisieren und ein Steuer-Submodul anzurufen;
wobei ferner das Steuer-Submodul dazu dient, den verbleibenden Kunden eingehend zu steuern, daß er sich dem neuen WIFI -basierten, lokalen Bereichsnetzwerk, das errichtet worden ist, anschließt;
wobei des weiteren der dritte Aktualisierungs-Submodul dazu dient, die Gerätezustands-Information des ausscheidenden Kunden und die Information des bestimmten WIFI -basierten, lokalen Bereichsnetzwerks, in dem sich der ausscheidende Kunde befindet, zu aktualisieren,
und wobei schließlich der vierte Aktualisierungs-Submodul dazu dient, die Gerätezustands-Information des ausscheidenden Kunden zu aktualisieren.

## Revendications

1. Procédé d'établissement automatique d'un réseau local à base de fidélité sans fil, WiFi, entre équipements dans un nuage privé, **caractérisé en ce qu'**il comprend :
étape 1 : l'acquisition (201), par un serveur, d'informations d'équipement rapportées par un client après que le client se connecte avec succès au serveur, et le stockage d'informations d'attribut d'équipement et d'informations d'état d'équipement du client selon les informations d'équipement, dans lequel les informations d'attribut d'équipement comprennent un identifiant de l'ensemble de services, SSID, d'un équipement où le client est installé, des informations de type et de version d'un système intelligent installé dans l'équipement et des informations WiFi, et dans lequel les informations d'état d'équipement comprennent un état de connexion, des informations selon lesquelles l'équipement a été ou non dans un certain réseau local à base de WiFi et des informations selon lesquelles l'équipement est ou non un point d'accès sans fil dans un certain réseau local à base de WiFi ; et
étape 2 : le fait d'estimer (202), par le serveur, si le client a ou non la capacité d'accéder à un réseau local à base de WiFi qui a été établi, selon les informations d'équipement et les informations d'état, et la commande du client pour qu'il rejoigne le réseau local à base de WiFi si le client a la capacité d'accéder au réseau local à base de WiFi qui a été établi, sinon le fait d'estimer si le client a ou non la capacité de former un nouveau réseau local à base de WiFi avec un autre client qui s'est connecté au serveur mais n'a accédé à aucun réseau local à base de WiFi, et la commande du client pour qu'il forme le nouveau réseau local à base de WiFi lorsque le serveur détermine que le client a la capacité de former le nouveau réseau local à base de WiFi,
dans lequel l'étape 2 comprend :
étape 21 : la recherche, par le serveur, des données locales pour estimer s'il existe ou non le réseau local à base de WiFi qui a été établi, l'exécution de l'étape 22 s'il existe le réseau local à base de WiFi qui a été établi, sinon l'exécution de l'étape 24 ;
étape 22 : la transmission, par le serveur, d'informations du réseau local à base de WiFi qui a été établi au client pour permettre au client de rejoindre le réseau local à base de WiFi qui a été établi, et l'exécution de l'étape 23 ;
étape 23 : la réception, par le serveur, d'informations de retour provenant du client, le fait d'estimer si le client a rejoint avec succès ou non le réseau local à base de WiFi qui a été établi, selon les informations de retour, l'exécution de l'étape 25 si le client a rejoint avec succès le réseau local à base de WiFi qui a été établi, sinon l'exécution de l'étape 24 ;
étape 24 : l'établissement, par le serveur, du nouveau réseau local à base de WiFi ; et
étape 25 : la mise à jour, par le serveur, des informations d'état d'équipement stockées localement.

2. Procédé selon la revendication 1, dans lequel l'étape 1 (201) comprend :
étape 11 : l'acquisition (301), par le serveur, des informations d'équipement rapportées par le client après que le client se connecte avec succès au serveur ;
étape 12 : le fait d'estimer (302), par le serveur, si les informations d'attribut d'équipement ont existé ou non, selon les informations d'équipement, l'exécution de l'étape 13 si les informations d'attribut d'équipement ont existé, sinon l'exécution de l'étape 14 ;
étape 13 : l'établissement (303) des informations d'état d'équipement correspondant aux informations d'attribut d'équipement selon les informations d'équipement, et l'initialisation des informations d'état d'équipement ; et
étape 14 : la génération (304) d'un identifiant de l'ensemble de services, SSID, virtuel du client, l'établissement des informations d'état d'équipement correspondant aux informations d'attribut d'équipement selon les informations d'équipement après que les informations d'attribut d'équipement correspondant au client sont ajoutées localement, et l'initialisation des informations d'état d'équipement.

3. Procédé selon la revendication 1, dans lequel l'étape 24 comprend :
étape 241 : le fait d'estimer (502), par le serveur, si le nombre d'un client libre est supérieur ou égal à 2 ou non, l'exécution de l'étape 242 si le nombre du client libre est supérieur ou égal à 2, sinon la fin de l'opération, dans lequel le client libre se réfère à un client qui s'est connecté au serveur mais n'a accédé à aucun réseau local à base de WiFi ;
étape 242 : la commande (503), par le serveur, du client pour qu'il démarre l'équipement où le client est installé en tant que point d'accès sans fil WiFi ;
étape 243 : le fait d'estimer (504), par le serveur, si le point d'accès sans fil WiFi est démarré avec succès ou non, l'exécution de l'étape 244 si le point d'accès sans fil WiFi est démarré avec succès, sinon la fin de l'opération ;
étape 244 : la transmission (505), par le serveur, d'informations de point d'accès sans fil WiFi à un autre client libre ;
étape 245 : le fait d'estimer (506), par le serveur, s'il existe ou non un client libre trouvant le client par WiFi, l'exécution de l'étape 246 s'il existe le client libre trouvant le client par WiFi, sinon la fin de l'opération ; et
étape 246 : la détermination (507), par le serveur, d'un point d'accès sans fil dans le nouveau réseau local à base de WiFi selon les informations d'attribut d'équipement, et la commande de l'autre client libre pour qu'il rejoigne le nouveau réseau local à base de WiFi.

4. Procédé selon la revendication 3, dans lequel l'étape de commande de l'autre client libre pour qu'il rejoigne le nouveau réseau local à base de WiFi comprend :
l'envoi (602), par le client, d'informations d'équipement de l'autre client libre au serveur pour une vérification après réception en provenance de l'autre client libre d'un message de demande pour rejoindre le réseau local à base de WiFi employant l'équipement comme point d'accès sans fil ;
si un client libre de l'autre client libre passe la vérification du serveur (603), le fait d'autoriser (604), par le client, le client libre de rejoindre le réseau local à base de WiFi employant l'équipement comme point d'accès sans fil, et l'envoi d'un message de succès de rattachement à l'autre client libre (605) ; et
si le client libre de l'autre client libre ne passe pas la vérification du serveur, l'envoi (606), par le client, d'un message d'échec de rattachement au client libre.

5. Procédé selon la revendication 1, comprenant en outre :
étape 3 : lorsque le serveur détecte qu'un certain client souhaite partir, la mise à jour (407), par le serveur, d'informations d'état d'équipement d'un client concerné et d'informations d'un réseau local à base de WiFi concerné.

6. Procédé selon la revendication 5, dans lequel l'étape 3 comprend :
étape 31 : lorsque le serveur détecte que le certain client souhaite partir, le fait d'estimer si le client partant est situé ou non dans un certain réseau local à base de WiFi (702), l'exécution de l'étape 32 si le client partant est situé dans un certain réseau local à base de WiFi, sinon l'exécution de l'étape 39 ;
étape 32 : le fait d'estimer (703), par le serveur, si le client partant est ou non un point d'accès sans fil dans le certain réseau local à base de WiFi, l'exécution de l'étape 33 si le client partant est un point d'accès sans fil dans le certain réseau local à base de WiFi, sinon l'exécution de l'étape 39 ;
étape 33 : le fait d'estimer (704), par le serveur, si le nombre d'un client restant dans le certain réseau local à base de WiFi est supérieur ou égal à 2 ou non, l'exécution de l'étape 34 si le nombre du client restant dans le certain réseau local à base de WiFi est supérieur ou égal à 2, sinon l'exécution de l'étape 36 ;
étape 34 : la détermination (708), par le serveur, d'un nouveau point d'accès sans fil selon des informations d'attribut d'équipement du client restant, et l'exécution de l'étape 35 ;
étape 35 : la construction (710), par le serveur, d'un nouveau réseau local à base de WiFi ;
étape 36 : la mise à jour (707), par le serveur, d'informations d'état d'équipement du client restant et d'informations d'état d'équipement du client partant, et l'exécution de l'étape 37 ;
étape 37 : la commande (709) du client restant pour qu'il rejoigne le nouveau réseau local à base de WiFi qui a été établi ;
étape 38 : la mise à jour (705) des informations d'état d'équipement du client partant et des informations du certain réseau local à base de WiFi où le client partant est situé ; et
étape 39 : la mise à jour (706) des informations d'état d'équipement du client partant.

7. Serveur d'établissement automatique d'un réseau local à base de fidélité sans fil, WiFi, entre équipements dans un nuage privé, **caractérisé en ce qu'**il comprend :
un module d'acquisition et de stockage (80), configuré pour acquérir des informations d'équipement rapportées par le client après que le client se connecte avec succès au serveur, et stocker des informations d'attribut d'équipement et des informations d'état d'équipement du client selon les informations d'équipement, dans lequel les informations d'attribut d'équipement comprennent un identifiant de l'ensemble de services, SSID, d'un équipement où le client est installé, des informations de type et de version d'un système intelligent installé dans l'équipement et des informations WiFi, et dans lequel les informations d'état d'équipement comprennent un état de connexion, des informations selon lesquelles l'équipement a été ou non dans un certain réseau local à base de WiFi et des informations selon lesquelles l'équipement est ou non un point d'accès sans fil dans un certain réseau local à base de WiFi ; et
un module de traitement (82), configuré pour estimer si le client a ou non la capacité d'accéder à un réseau local à base de WiFi qui a été établi, selon les informations d'équipement et les informations d'état, commander le client pour qu'il rejoigne le réseau local à base de WiFi si le client a la capacité d'accéder au réseau local à base de WiFi qui a été établi, sinon estimer si le client a ou non la capacité de former un nouveau réseau local à base de WiFi avec un autre client qui s'est connecté au serveur mais n'a accédé à aucun réseau local à base de WiFi, et commander le client pour qu'il forme le nouveau réseau local à base de WiFi lorsque le serveur détermine que le client a la capacité de former le nouveau réseau local à base de WiFi,
dans lequel le module de traitement comprend :
un sous-module de recherche, configuré pour rechercher des données locales pour estimer s'il existe ou non le réseau local à base de WiFi qui a été établi, appeler un sous-module de transmission si le réseau local à base de WiFi qui a été établi est trouvé, sinon appeler un sous-module d'établissement ;
le sous-module de transmission, configuré pour transmettre des informations du réseau local à base de WiFi qui a été établi au client pour permettre au client de rejoindre le réseau local à base de WiFi qui a été établi, et appeler un deuxième sous-module d'estimation ;
le deuxième sous-module d'estimation, configuré pour recevoir des informations de retour provenant du client, estimer si le client a rejoint avec succès ou non le réseau local à base de WiFi qui a été établi selon les informations de retour, appeler un premier sous-module de mise à jour si le client a rejoint avec succès le réseau local à base de WiFi qui a été établi, sinon appeler le sous-module d'établissement ;
le sous-module d'établissement, configuré pour établir le nouveau réseau local à base de WiFi ; et
le premier sous-module de mise à jour, configuré pour mettre à jour les informations d'état d'équipement stockées localement.

8. Serveur selon la revendication 7, dans lequel le module d'acquisition et de stockage comprend :
un sous-module d'acquisition, configuré pour acquérir les informations d'équipement rapportées par le client après que le client se connecte avec succès au serveur ;
un premier sous-module d'estimation, configuré pour estimer si les informations d'attribut d'équipement ont existé ou non, selon les informations d'équipement, appeler un premier sous-module de traitement si les informations d'attribut d'équipement ont existé, sinon appeler un deuxième sous-module de traitement ;
le premier sous-module de traitement, configuré pour établir les informations d'état d'équipement correspondant aux informations d'attribut d'équipement selon les informations d'équipement, et initialiser les informations d'état d'équipement ; et
le deuxième sous-module de traitement, configuré pour générer un SSID virtuel du client, établir les informations d'état d'équipement correspondant aux informations d'attribut d'équipement selon les informations d'équipement après que les informations d'attribut d'équipement correspondant au client sont ajoutées localement, et initialiser les informations d'état d'équipement.

9. Serveur selon la revendication 7, dans lequel le sous-module d'établissement comprend :
une première unité d'estimation, configurée pour estimer si le nombre d'un client libre est supérieur ou égal à 2 ou non, appeler une première unité de commande si le nombre du client libre est supérieur ou égal à 2, sinon finir l'opération, dans lequel le client libre se réfère à un client qui s'est connecté au serveur mais n'a accédé à aucun réseau local à base de WiFi ;
une première unité de commande, configurée pour commander le client pour qu'il démarre l'équipement où le client est installé en tant que point d'accès sans fil WiFi ;
une deuxième unité d'estimation, configurée pour estimer si le point d'accès sans fil WiFi est démarré avec succès ou non, appeler une unité de transmission si le point d'accès sans fil WiFi est démarré avec succès, sinon finir l'opération ;
l'unité de transmission, configurée pour transmettre des informations de point d'accès sans fil WiFi à un autre client libre ;
une troisième unité d'estimation, configurée pour estimer s'il existe ou non un client libre trouvant le client par WiFi, appeler une deuxième unité de commande s'il existe le client libre trouvant le client par WiFi, sinon finir l'opération ; et
une deuxième unité de commande, configurée pour déterminer un point d'accès sans fil dans le nouveau réseau local à base de WiFi selon des informations d'attribut d'équipement, et commander l'autre client libre pour qu'il rejoigne le nouveau réseau local à base de WiFi.

10. Serveur selon la revendication 9, dans lequel la deuxième unité de commande est spécifiquement configurée pour, après que le client reçoit en provenance de l'autre client libre, un message de demande pour rejoindre le réseau local à base de WiFi employant l'équipement comme point d'accès sans fil, recevoir des informations d'équipement de l'autre client libre provenant du client, réaliser une vérification sur l'autre client libre selon les informations d'équipement de l'autre client libre et envoyer un résultat de vérification au client.

11. Serveur selon la revendication 7, comprenant en outre :
un module de partance, configuré pour, lorsqu'un certain client est détecté comme partant, mettre à jour des informations d'état d'équipement d'un client concerné et des informations d'un réseau local à base de WiFi concerné.

12. Serveur selon la revendication 11, dans lequel le module de partance comprend :
un troisième sous-module d'estimation, configuré pour, lorsque le certain client est détecté comme partant, estimer si le client partant est situé ou non dans un certain réseau local à base de WiFi, appeler un quatrième sous-module d'estimation si le client partant est situé dans un certain réseau local à base de WiFi, sinon appeler un quatrième sous-module de mise à jour ;
le quatrième sous-module d'estimation, configuré pour estimer si le client partant est ou non un point d'accès sans fil dans le certain réseau local à base de WiFi, appeler un cinquième sous-module d'estimation si le client partant est un point d'accès sans fil dans le certain réseau local à base de WiFi, sinon appeler un troisième sous-module de mise à jour ;
le cinquième sous-module d'estimation, configuré pour estimer si le nombre d'un client restant dans le certain réseau local à base de WiFi est supérieur ou égal à 2 ou non, appeler un sous-module de détermination si le nombre du client restant dans le certain réseau local à base de WiFi est supérieur ou égal à 2, sinon appeler un deuxième sous-module de mise à jour ;
le sous-module de détermination, configuré pour déterminer un nouveau point d'accès sans fil selon des informations d'attribut d'équipement du client restant, et appeler un sous-module de construction ;
le sous-module de construction, configuré pour construire un nouveau réseau local à base de WiFi ;
le deuxième sous-module de mise à jour, configuré pour mettre à jour des informations d'état d'équipement du client restant et des informations d'état d'équipement du client partant, et appeler un sous-module de commande ;
le sous-module de commande, configuré pour commander le client restant pour qu'il rejoigne le nouveau réseau local à base de WiFi qui a été établi ;
le troisième sous-module de mise à jour, configuré pour mettre à jour les informations d'état d'équipement du client partant et les informations du certain réseau local à base de WiFi où le client partant est situé ; et
le quatrième sous-module de mise à jour, configuré pour mettre à jour les informations d'état d'équipement du client partant.
